# FASCICULE DE BREVET EUROPEEN

(11) **EP 2 135 403 B1**
(45) Date de publication et mention de la délivrance du brevet: **22.04.2015**
(21) Numéro de dépôt: 08735473.4
(22) Date de dépôt: 26.03.2008
(51) Int. Cl.: H04L 12/70

(54) **PROCEDE ET SYSTEME DE ROUTAGE MULTITOPOLOGIE**
MULTITOPOLOGISCHES ROUTINGVERFAHREN UND SYSTEM
MULTITOPOLOGY ROUTING METHOD AND SYSTEM

(30) Priorité: 30.03.2007 FR 0702346
(43) Date de publication de la demande: 23.12.2009
(73) Titulaire: THALES, 92200 Neuilly-sur-Seine (FR)
(72) Inventeur: SCHUTZ, Roland, F-91940 Gometz Le Chatel (FR); DELATTRE, Michel, F-92100 Boulogne (FR)
(74) Mandataire: Dudouit, Isabelle
(86) Numéro de dépôt international: PCT/EP2008/053519
(87) Numéro de publication internationale: WO 2008/125437

(56) Documents cités:
- US-A1- 2006 101 158
- US-A1- 2007 030 852
- US-A1- 2007 047 463
- HANSEN A F ET AL: "Resilient Routing Layers for Recovery in Packet Networks" DEPENDABLE SYSTEMS AND NETWORKS, 2005. DSN 2005. PROCEEDINGS. INTERNATIONAL CONFERENCE ON YOKOHAMA, JAPAN 28-01 JUNE 2005, PISCATAWAY, NJ, USA,IEEE, 28 juin 2005 (2005-06-28), pages 238-247, XP010817800 ISBN: 0-7695-2282-3

## Description

L'invention concerne, notamment, un procédé et un système permettant de déterminer des routes optimales pour transférer des flux de données, ou des informations, dans un système de routage comprenant plusieurs routeurs de type multitopologie, et permettant de répartir les routes dans un réseau maillé pour occuper au mieux les ressources nécessaires à l'écoulement des flux.

L'invention s'applique, par exemple, dans des réseaux utilisant le protocole Internet IP, les données étant transmises dans des paquets IP.

Un routeur IP a pour fonction de relayer un paquet IP arrivant sur une de ses interfaces vers une autre interface en se basant sur l'adresse IP de destination et sur une table d'aiguillage ou Forwarding Information Base (FIB) en anglais. La table d'aiguillage est construite à partir d'informations collectées par un protocole de routage (identité des noeuds voisins, état et métriques des liens) et mémorisées dans une table de données de routage, aussi appelée Routing Information Base (RIB) en anglais.

Un routeur de type multitopologie est capable de gérer plus d'un plan de routage sur une seule topologie physique. Il maintient pour chaque plan une table d'aiguillage et, lors d'un aiguillage de paquet, il sélectionne la table d'aiguillage en fonction d'indicateurs lus dans l'entête de paquet. Il est possible de se représenter les plans de routage comme étant superposés dans un certain ordre. Un plan est donc identifié par son niveau ou numéro d'ordre. Un plan se caractérise par des valeurs spécifiques des métriques de lien, indépendantes de celles des autres plans. Il en résulte qu'un tel routeur calcule, à partir des données de routage, autant de tables d'aiguillage que de plans de routage. Dans un réseau constitué de tels routeurs, un paquet est relayé à chaque bond en fonction de son adresse de destination et du plan de routage auquel il appartient, ce plan étant déterminé par une caractéristique inscrite dans le paquet, par exemple, dans le champ DSCP (Differentiated Services CodePoint) de son entête de paquet IP. À côté du protocole de routage OSPF (Open Shortest Path First), il existe ainsi un routage OSPF multitopologie décrit dans une norme parue récemment à l'IETF (RFC 4915). Les routeurs multitopologie dont il est question dans cette demande de brevet peuvent donc être des routeurs mettant en oeuvre un routage OSPF multitopologie et un mécanisme de relayage selon plusieurs tables de routage indépendantes. Par abus de langage, dans ce qui suit, le terme « topologie » pourra signifier « plan de routage ».

L'art antérieur tel que le document US 2007/0047463 décrivant un routeur multitopologie basé sur IS-IS, divulgue en outre de nombreux procédés de routage et de gestion de ressources. Parmi eux, il existe :
o des protocoles de signalisation : RSVP (Resource ReSerVation Protocol), RSVP-TE (Resource Reservation Protocol: Trafic Engineering), CR-LDP pour Constraint-Routing Label Distribution Protocol;
o des protocoles de routage: OSPF (Open Shortest Path First), OSPF multitopologie, OSPF-TE (OSPF Traffic Engineering), CSPF (Constrained Shortest Path First ).

Toutefois, ces différents procédés ne permettent pas d'obtenir une solution de routage distribuée et auto-adaptative servant une qualité de service QoS aux flux utilisant protocole IP et, en cas de pénurie de ressources, pilotant un contrôle d'admission des flux selon l'importance opérationnelle. Les exigences pour obtenir une telle solution sont notamment:
➢ de trouver les chemins optimaux pour les flux d'informations à travers un réseau maillé en prenant en compte les ressources déjà réservées sur chaque composante de ce réseau maillé,
➢ de réserver des ressources pour des flux identifiables, en prenant en compte à la fois les objectifs d'écoulement à tenir et l'importance à maintenir ces objectifs au cours de la vie du flux,
➢ d'arbitrer l'ordre de passage des flux en cas de pénurie de ressources, en re-routant les flux existants d'importance moindre vers des routes moins favorables à la tenue des objectifs d'écoulement, libérant ainsi des ressources aux profits des flux importants,
➢ de réduire et même d'interdire l'écoulement de flux existants de faible importance, en cas de pénurie générale de ressources, en agissant sur une signalisation destinée aux points d'entrée dans le réseau et aux applications à l'origine des flux,
➢ d'écouler les flux d'informations dans chaque composante du réseau maillé selon les ressources réservées par le protocole de signalisation.

L'invention concerne un procédé de routage de flux de données dans un système maillé caractérisé en ce qu'il met en oeuvredes routeurs multitopologie pourvus chacun d'un module intelligent et en ce qu'il comporte au moins les étapes suivantes :
➢ comptabiliser des besoins en ressources pour tenir les objectifs d'écoulement quantitatifs et qualitatifs des flux admis, selon l'importance opérationnelle des flux,
➢ propager de routeur en routeur des besoins exprimés grâce à une signalisation aiguillée dans une topologie et une correspondance dans chaque routeur entre topologie et importance opérationnelle afin de permettre la comptabilisation des besoins admis,
➢ au niveau d'un module intelligent élaborer à partir de la comptabilisation des besoins admis, une métrique de liens pour chacune des topologies,
➢ au niveau de chaque routeur multitopologie maintenir des données de routage avec, en particulier, les métriques de liens calculées dynamiquement par chaque module intelligent et déterminer une table d'aiguillage pour chaque topologie,
➢ chaque routeur est adapté à permettre la propagation des flux de données selon la table d'aiguillage asscoiée à la topologie, topologie qui est désignée par les champs d'en-tête des paquets,
   ∘ hiérarchiser les topologies ou plans de routages gérés par le réseau de routeurs multitopologie, une topologie étant définie par des métriques indépendantes et donnant lieu à un calcul de route optimale,
   ∘ attribuer à chaque lien des ressources, lesdites ressources étant utilisables indifféremment par les flux de paquets de données, indépendamment de la topologie à laquelle ils appartiennent,
   ∘ déterminer les métriques d'une topologie de niveau n-1, en tenant compte des ressources réservées par les flux véhiculés sur les topologies d'importance opérationnelle strictement plus élevée de niveau n ou de niveau supérieur à n,
   ∘ maintenir des tables de données de routage séparées par topologie et des tables d'aiguillage également séparées par topologie,
   ∘ mettre à jour dans chaque routeur les table de données de routage en utilisant entre les routeurs un protocole de routage commun à toutes les topologies et des métriques propres à chaque topologie.

Le calcul de la métrique peut aussi prendre en compte, l'une des caractéristiques suivantes : la largeur de bande disponible pour les flux temps réels, le délai de transmission du lien.

La métrique peut évoluer par palier, le passage d'un palier à un autre étant protégé par des mécanismes d'hystérésis.

Une signalisation de gestion de ressources peut être utilisée dans le procédé. Cette signalisation peut être de type RSVP.

Le réseau est, par exemple, un réseau de communication supportant le protocole Internet IP et dans lequel un marquant indiquant la topologie dans lequel le paquet est acheminé est disposé dans le champ DSCP de l'entête du paquet de données. L'invention concerne aussi un système de routage de flux de données se présentant sous la forme de paquets, caractérisé en ce qu'il comporte un ensemble de noeuds, chaque noeud comprenant un routeur multitopologie, un tel routeur possédant un module logiciel adapté à exécuter les étapes du procédé décrit précédemment.

Le système est, par exemple, constitué d'un réseau maillé administré comprenant des mandataires situés en bordure du réseau, lesdits mandataires ayant pour fonction d'injecter et/ou de consommer les signalisations de réservation dans le système de routage.

Le réseau supporte, par exemple, le protocole Internet IP et il utilise le protocole de réservation de ressources RSVP précité.

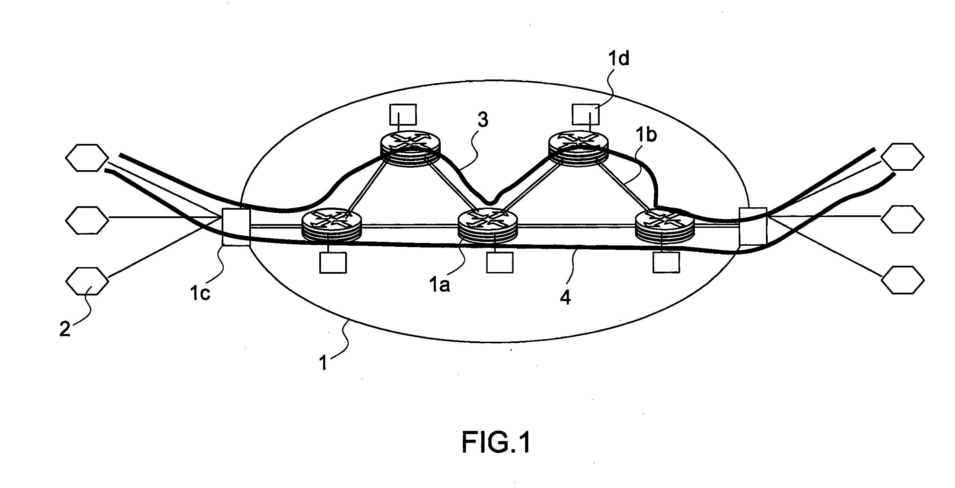

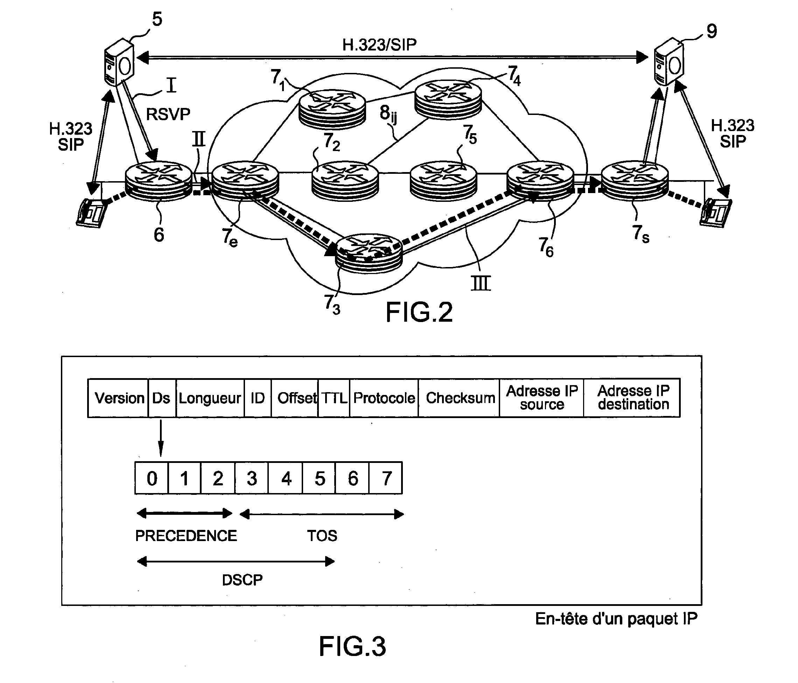

D'autres caractéristiques et avantages de la présente invention apparaîtront mieux à la lecture de la description qui suit annexée des figures qui représentent :
➢ La figure 1 : un exemple de réseau dans lequel l'invention peut être appliquée,
➢ La figure 2 : un exemple de mise en oeuvre du procédé selon l'invention, et
➢ La figure 3 : un exemple de structure de données pour exprimer au sein d'un paquet d'information des objectifs de performance d'écoulement des flux.

La figure 1 représente un exemple permettant d'introduire certaines notions utilisées dans la présente invention :
1) un domaine de routage 1 ou réseau maillé administré,
2) des mandataires 1c en bordure de ce domaine ayant notamment pour mission d'injecter et/ou de consommer les signalisations de réservations dans le domaine de routage 1 sous contrôle de l'administration de ce domaine. Ces mandataires vont notamment autoriser l'entrée des flux, les mettre en forme et vont interagir avec les applications à l'origine des flux.

L'administration du domaine de routage est une entité qui planifie une « connaissance » initiale qui sera poussée sur l'ensemble des composantes du domaine. Elle n'a pas à être directement connectée aux équipements. Cette connaissance peut se matérialiser, par exemple, par des fichiers de configurations rémanents dans les composantes du domaine. 3) des applications 2 au-delà des limites administratives du domaine de routage.

La référence 1 désigne un domaine de routage sur lequel l'invention est appliquée. Le domaine comprend, dans cet exemple, plusieurs noeuds de routage 1a, des liens de transmission 1b entre deux noeuds 1a, des mandataires 1c disposés en bordure du domaine 1 entre les applications générant des flux d'informations et des ressources d'acheminement (capacité des liens, capacité des noeuds) du domaine, et des agents de gestion adaptative 1d, un agent étant disposé au niveau d'un noeud de routage du domaine.

La référence 2 désigne des applications ayant un besoin d'écouler des flux d'informations avec des exigences de qualité de service (QoS) à travers des domaines de routage, en particulier le domaine 1 sur lequel s'applique l'invention.

Les flux d'informations critiques avec un objectif de performances d'écoulement sont référencés 3 et les flux d'informations non critiques 4.

La figure 2 fait apparaître des équipements 10 en bordure du domaine de routage multitopologie qui interceptent des signalisations, telles que SIP ou H.323 venant d'applications et qui engendrent une signalisation de réservation, par exemple de type RSVP, dans l'une des topologies. Le niveau de la topologie est choisi en fonction de l'importance à maintenir les objectifs de performance pendant toute la vie d'une session. Une session d'importance opérationnelle faible sera maintenue par des demandes de ressources désignant des objectifs à atteindre pendant un pourcentage de temps déterminé. Les flux de données de la session suivront une route optimale dans une topologie d'importance faible et le calcul de cette route sera revu en fonction des métriques qui subiront des variations dues aux évènements des topologies d'importance plus élevée. La route de la session pourra être modifiée sans rompre le service offert aux applications. Ce reroutage pourra introduire un écart transitoire des caractéristiques d'écoulement mais maintiendra la connectivité. Par exemple, un bruit parasite lors d'une conversation téléphonique est tout à fait acceptable du fait de sa rareté.

La figure 2 représente un exemple de réalisation non limitatif du procédé de routage selon l'invention.

Le procédé et le système selon l'invention utilisent, notamment, des routeurs de type multitopologie. Ces routeurs comprennent, par exemple, les éléments et les fonctions suivantes :
∘ Les tables de données de routage RIB et le maintien de ces tables de façon séparée pour chaque topologie,
∘ des tables d'aiguillage (FIB) pour chaque topologie, et leur maintien. Les tables de données de routage sont mises à jour par un protocole de routage commun et des métriques propres à chaque topologie, chaque FIB est le résultat d'un calcul de route propre à la topologie et utilisant les métriques de la topologie.

Ces tables sont intégrées dans les routeurs multitopologie et ne sont pas représentées par souci de clarté.

Dans cet exemple, le système permettant la mise en oeuvre du procédé selon l'invention comporte:Un serveur d'appels 5, en liaison avec un premier routeur 6 ou routeur d'accès dont la fonction est explicitée plus loin dans la description. Le routeur d'accès communique avec au moins un premier routeur multitopologie ou routeur d'entrée 7e par l'intermédiaire d'une artère 8ij ou tronçon du réseau de communication. Le système comprend plusieurs routeurs multitopologie 7i, reliés entre eux par des artères 8ij. Le dernier routeur 7s ou routeur de sortie est en liaison avec la destination 9.

L'idée de l'invention repose notamment sur les hypothèses suivantes :
➢ modifier dynamiquement les métriques d'un protocole interne de routage IGP (Interior Gateway Protocol) fonctionnant selon une méthode multitopologie et produire, pour chaque topologie, une table d'aiguillage utilisée par le module de relayage des données « Forwarding Engine » présent dans le routeur, selon une méthode connue de l'Homme du métier
➢ superviser les états entretenus par le protocole de réservation de ressources RSVP adapté à comptabiliser les ressources nécessaires à l'écoulement des flux, à négocier des réductions en cas de pénurie et à tenir compte de l'importance des flux, importance qui est marquée par un identifiant dans les paquets de données. Ce comportement est décrit, par exemple, dans le document RFC 3181 (accessible par le lien Internet www.apps.ietf.org/rfc), et le routeur sera compatible avec cette fonctionnalité.

D'un point de vue système, l'objet de l'invention respecte les principes suivants :
➢ Au niveau système, on distingue une topologie par niveau d'importance opérationnelle, par exemple une topologie correspondant aux flux de commandement dont l'écoulement est impératif,
➢ L'importance opérationnelle peut comporter plusieurs niveaux. Il est possible de définir un niveau pour des flux d'informations « rapides temps réels » (au sens écoulement impératif absolu), dits encore « flash »,
➢ un niveau peut être défini pour des flux d'informations immédiats temps réel (au sens écoulement impératif),
➢ un niveau peut aussi être défini pour des flux d'informations urgents temps réel (au sens écoulement critique),
➢ un niveau peut être défini pour des flux d'informations de routine temps réel (au sens écoulement d'importance normale),
➢ un niveau de base peut être défini pour des flux d'informations non temps réel (écoulement pouvant être retardé).

Le nombre de niveaux est déterminé, par exemple, en fonction de l'application visée.

Les applications qui génèrent les flux temps réel, passent par les mandataires 1c (figure 1) situés en bordure du réseau qui sont en charge d'initier le procédé de réservation de ressources, au sein de la topologie appropriée, selon le niveau d'importance opérationnelle du flux.

La réservation de ressources se propage à travers le coeur du réseau (c'est-à-dire à travers les noeuds de routage du domaine et les artères) et suit, à partir de la source jusqu'à la destination, à chaque saut, le chemin présent dans la table d'aiguillage correspondant au niveau d'importance opérationnelle pour la transmission de la réservation de ressources. Ce procédé est mis en oeuvre par chaque routeur faisant partie du coeur de réseau.

Le logiciel ou module intelligent associé à chaque routeur multitopologie détermine, périodiquement, la proportion de ressources occupées par les flux admis pour les différents niveaux d'importance opérationnelle, c'est-à-dire pour les différentes topologies, et calcule une métrique de liens pour chacune des topologies. Le logiciel échantillonne à un rythme suffisamment élevé les états pour que la constante de temps du système global soit bonne, en rapport avec la durée de vie moyenne des sessions. L'élaboration de la métrique est fondée par exemple sur les principes suivants :
L'élaboration de la métrique propre à une topologie prend, par exemple, en compte les ressources réservées par les flux véhiculés sur les topologies d'importance opérationnelle strictement plus élevée,

Le calcul de la métrique peut aussi prendre en compte: la largeur de bande disponible pour les flux temps réel, le délai de transmission du lien,

La métrique évolue par palier. Le passage d'un palier à une autre est protégé par des mécanismes d'hystérésis qui contribuent à la stabilité de la métrique et donc des décisions de routage qui en découlent.

Le procédé selon l'invention exécute, par exemple, les étapes suivantes :
➢ Hiérarchiser des topologies superposables au sein d'un même routeur multitopologie, une topologie étant définie par des métriques indépendantes et donnant lieu à un calcul de route optimale, une superposition étant une utilisation d'une unique topologie physique
➢ Décompter les ressources occupées dans chaque topologie des ressources attribuées à la topologie physique,
➢ Agir sur les métriques d'une topologie de niveau n-1, à partir de la connaissance locale des ressources occupées par les topologies de niveau n ou de niveau supérieur à n,
➢ Maintenir des tables de données de routage séparées par topologie logique et des tables d'aiguillage également séparées par topologie logique,
➢ Mettre à jour les tables de données de routage RIB par un protocole de routage commun et des métriques propres à chaque topologie.

Le module intelligent de commande peut être en relation avec un gestionnaire de ressources lorsque les liens entre routeurs multitopologie sont des liens multipoints. Un exemple représentatif est celui des liens relayés par satellite où un ensemble de noeuds sont tous directement raccordés entre eux grâce au relais du satellite. Un partage dynamique des ressources radio entre l'ensemble de ces noeuds est alors orchestré par un gestionnaire de ressources Radio qui distribue les ressources radio matérialisant le lien multipoint au gré des besoins de chacun des noeuds. La relation entre les modules de commande et ce gestionnaire de ressources Radio permet à chacun des modules intelligents associés aux routeurs multitopologie reliés par un lien multipoint de connaître la capacité restante disponible du lien multipoint et la répartition par importance opérationnelle de l'occupation de ce lien.

Les paquets de signalisation de gestion de ressources contiennent, par exemple, l'identification des objectifs d'écoulements et l'identification de l'importance à maintenir ces objectifs lors de la vie d'un flux. Cette importance est mise en bijection avec une topologie (caractérisée par des métriques qui lui sont propres)sur laquelle les paquets de données doivent être transmis. Les paquets de données portent dans leur entête une indication permettant le relayage au sein d'une topologie. Cette indication est présente, par exemple, dans un champ spécifique DSCP du paquet de données qui est codé de la façon suivante, par exemple:
- "101001" pour la topologie rapide (flash) temps réel,
- "101010" pour la topologie immédiate temps réel,
- "101011" pour la topologie flux urgents temps réel,
- "101100" pour la topologie routine temps réel.

Une utilisation d'IP version 6 offre de nombreux champs d'entêtes supplémentaires permettant de coder ces identifiants de topologie.

Dans un cas plus général, les identifiants de topologie peuvent aussi être déduits par chaque routeur des conditions de réception du paquet (fréquence, intervalle de temps,...).

Les flux transmis sur les topologies avec des objectifs d'écoulement temps réel sont traités par l'intermédiaire de la file d'attente de faible latence et obtiennent le même niveau de qualité, quelle que soit l'importance opérationnelle qui leur est associée.

L'exemple de système décrit à la figure 2 fonctionne, par exemple, de la manière décrite ci-après. Le terminal utilisateur a notamment pour fonction de gérer le protocole de signalisation et les flux média (flux I représenté en pointillé sur la figure 2).

Le serveur 5 (mandataire) est adapté à :
➢ contrôler les droits d'accès à partir d'une base de données d'annuaire et, éventuellement, après vérification de l'identité et de l'authenticité de l'utilisateur, et valider un niveau d'importance opérationnelle de la communication à partir de la demande initiale de l'utilisateur et de ses prérogatives autorisées
➢ transmettre la signalisation au serveur qui connecte l'appelant en tenant compte de la localisation de l'appelant (flèches II)
➢ générer la réservation de ressources sur la topologie concernée (flèches III)
➢ contrôler le comportement du routeur d'accès (contrôle de l'autorisation d'émettre un flux, contrôle du marquage DSCP à la valeur correspondant à la topologie choisie,..). Si une communication est préemptée, alors le serveur demande au routeur de marquer le flux avec la mention du moindre effort ou « best effort », jusqu'à ce qu'une autre requête de réservation de ressources soit émise avec succès.

Le routeur d'accès 7e est en charge, notamment, de :
➢ transmettre les paquets RSVP sur la topologie adéquate vers la destination,
➢ assurer la priorité relative de relayage des flux utilisateurs en fonction de ce qui est requis pour ce micro-flux,
➢ marquer les paquets d'un flux de type multimédia, par exemple, avec le DSCP correct, afin de garantir que ce flux sera transmis sur la bonne topologie et utilisera la même route que le RSVP générée par le serveur.

Un routeur multitopologie, associé à un module intelligent élaborant les métriques de lien, a notamment pour fonctions :
➢ de maintenir à jour la base de données de routage pour chaque topologie configurée dans le système, en particulier, les métriques propres la topologie
➢ d'équilibrer les charges sur les topologies grâce aux décisions du module intelligent qui modifie dynamiquement les métriques de liens dans chaque routeur en tenant compte par exemple:
   ➢ des caractéristiques du lien (latence, fiabilité,...),
   ➢ des ressources réservées par des priorités opérationnelles les plus élevées,
➢ de transmettre les paquets selon la table d'aiguillage appropriée en accord avec le champ DSCP,
➢ de gérer la réservation de ressources sur les artères ou les tronçons du réseau pour les flux des utilisateurs,
➢ de gérer la préemption des flux des utilisateurs selon la norme RFC 3181, par exemple,
➢ de gérer le relayage de proche en proche selon les principes de DiffServ (Differentiated services) ; les flux multimédia temps réels sont transmis à travers la file d'attente de faible latence.

Dans le cadre d'une application dans un réseau supportant le protocole IP et utilisant la réservation de ressources RSVP, le procédé selon l'invention fonctionne, par exemple, de la manière décrite ci-après.

Le procédé prend en compte l'importance à tenir les objectifs d'écoulement des flux, et il attribue une topologie, caractérisée par des métriques qui lui sont propre, à chaque niveau d'importance opérationnelle ainsi qu'une valeur du champ DSCP de l'entête de paquet. De cette manière, le module de relayage va utiliser, en fonction des informations contenues dans le champ DSCP, une table d'aiguillage correspondant à la topologie donnée, laquelle table indique le chemin le plus efficace pour transmettre un paquet de données dans un réseau IP.

La réservation de ressources est basée, par exemple, sur la signalisation standard RSVP ou toute autre signalisation présentant les mêmes caractéristiques.

Le niveau de réservation de ressources est utilisé par le module intelligent qui calcule, pour une topologie donnée, la métrique de chaque lien selon les réservations faites pour des flux transmis sur les topologies de niveaux plus élevés. Après avoir calculé la métrique du lien attribué à une topologie, le logiciel intelligent met à jour les paramètres locaux de configuration du routeur multitopologie et le protocole de routage tiendra compte des nouvelles valeurs de métriques, diffusera ces valeurs aux autres routeurs, directement pour les routeurs éloignés d'un saut ou indirectement pour les routeurs plus éloignés et si, nécessaire, il met à jour la table d'aiguillage.

L'utilisation d'une signalisation de gestion de ressources permet notamment de fournir une connaissance du besoin à écouler aux systèmes de transmission afin qu'ils puissent optimiser leur service de transmission, cette optimisation pouvant être un choix de modulation, de codage, de traitement d'antenne. Ceci rejoint la notion de gestionnaire de ressources Radio introduite ci-après. Le système de transmission n'est pas forcément un lien point-à-point : il peut être un système Satellite, un système aéroporté, un réseau WiFi de type IEEE 802.11, une cellule WiMax de type IEEE 802.16. Un organe de décision central répartit dynamiquement les ressources Radio entre les participants au lien multipoint en fonction des besoins et des conditions d'environnement-brouillage, condition de propagation, condition de réception ; ces systèmes intègrent des parties «codage », « modulation » et « antenne », ces parties peuvent s'adapter et c'est le gestionnaire de ressources Radio qui orchestre cette adaptation afin d'obtenir l'optimisation du segment Radio pour chaque flux identifié, fournir une indication aux mandataires en bordure et par ricochet aux applications sur la disponibilité du service d'écoulement d'un flux.

Sur la figure 3, est rappelée la structure d'un en-tête d'un paquet IP, notamment la présence d'un champ DSCP, champ codé sur les 6 premiers bits du champ DS pour la diffusion de service dans un réseau mettant en oeuvre Diffserv.

De manière générale, chaque paquet d'information est accompagné de marquants ou identifiants qui identifient 2 notions :
1) le profil d'écoulement à respecter,
2) l'importance à maintenir les objectifs d'écoulement.

Ces identifiants peuvent, soit être portés par l'entête de paquet comme décrit dans l'exemple de paquet IP version 4 (ex figure 3), soit être déduits à chaque noeud du réseau des conditions de réception du paquet (fréquence radio ou optique, intervalle de temps, ou informations transmises entre noeuds et corrélées avec le paquet).

Le procédé et le système, objets de l'invention, présentent notamment les avantages suivants :
∘ trouver et adapter un chemin ou une route optimale pour les flux de données à travers un réseau maillé en tenant compte des ressources réservées antérieurement et de l'importance à tenir des objectifs d'écoulement des flux attachés à ces ressources réservées,
∘ transmettre le flux d'informations à travers le réseau maillé sur des tronçons ou artères point-à-point ou multipoint où les ressources ont été réservées pour ce flux identifié (la signalisation de réservation donne les règles d'identification appliquées sur les paquets de données à transmettre).
   ➢ Les routeurs utilisés pour cette solution sont des routeurs appliquant, par exemple, les principes et protocoles publiés par l'IETF et incluant les services RSVP et OSPF multitopologie ; la solution offre une robustesse plus élevée du fait d'un couplage lâche avec le module de commande chargé du calcul des métriques et des décisions de réservations,
   ➢ La solution intègre dans le domaine du routage une nouvelle dimension qui est l'importance opérationnelle. Grâce au comportement global, les flux ayant un niveau d'importance élevé obtiendront les ressources les plus adéquates pour une communication spécifique.

## Revendications

1. Procédé de routage de flux de données dans un système maillé **caractérisé en ce qu'**il met en oeuvre des routeurs multi topologie pourvus chacun d'un module intelligent et **en ce qu'**il comporte pour chaque routeur en combinaison au moins les étapes suivantes :
➢ comptabiliser des besoins en ressources pour tenir les objectifs d'écoulement quantitatifs et qualitatifs des flux admis, comptabilisation organisée selon l'importance opérationnelle des flux,
➢ propager de routeur en routeur des besoins exprimés grâce à une signalisation aiguillée dans une topologie et une correspondance dans chaque routeur entre topologie et importance opérationnelle afin de permettre la comptabilisation des besoins admis,
➢ au niveau d'un module intelligent élaborer à partir de la comptabilisation des besoins admis, une métrique de liens pour chacune des topologies,
➢ au niveau de chaque routeur multitopologie maintenir des données de routage, avec en particulier, les métriques de liens calculées dynamiquement par chaque module intelligent et déterminer une table d'aiguillage pour chaque topologie,
➢ chaque routeur est adapté à permettre la propagation des flux de données selon la table d'aiguillage associée à la topologie, topologie qui est désignée par les champs d'en-tête de paquets ;
➢ hiérarchiser les topologies ou plans de routages, gérés par le réseau de routeurs multitopologie, une topologie étant définie par des métriques indépendantes et donnant lieu à un calcul de route optimale,
➢ attribuer à chaque lien des ressources, lesdites ressources étant utilisables indifféremment par les flux de paquets de données, indépendamment de la topologie à laquelle ils appartiennent,
➢ déterminer les métriques d'une topologie de niveau n-1, en tenant compte des ressources réservées par les flux véhiculés sur les topologies d'importance opérationnelle strictement plus élevée de niveau n ou de niveau supérieur à n,
➢ maintenir des données de routage séparées par topologie et des tables d'aiguillage également séparées par topologie,
➢ mettre à jour dans chaque routeur les données de routage en utilisant entre les routeurs un protocole de routage commun à toutes les topologies et des métriques propres à chaque topologie.

2. Procédé selon la revendication 1- **caractérisé en ce que** le calcul de la métrique prend en compte au moins l'un des paramètres suivants: la largeur de bande disponible pour les flux temps réel, le délai de transmission du lien.

3. Procédé selon l'une des revendications 1 à 2 **caractérisé en ce que** l'on fait évoluer la métrique par palier, le passage d'un palier à un autre étant protégé par des mécanismes de d'hystérésis.

4. Procédé selon l'une des revendications 1 à 3 **caractérisé en ce que** l'on utilise une signalisation de gestion de ressources.

5. Procédé selon la revendication 4 **caractérisé en ce que** l'on utilise une signalisation de type RSVP.

6. Procédé selon la revendication 1 **caractérisé en ce que** le réseau est un réseau de communication supportant le protocole Internet IP et **en ce que** l'on dispose dans le champ du paquet de données DSCP un marquant indiquant l'importance opérationnelle des données.

7. Système de routage de flux de données se présentant sous la forme de paquets, **caractérisé en ce qu'**il comporte un ensemble de noeuds comprenant chacun un routeur multitopologie, un routeur possédant un module logiciel adapté à exécuter les étapes du procédé selon l'une des revendications 1 à 6.

8. Système de routage selon la revendication 7 **caractérisé en ce que** le module logiciel est adapté:
∘ à maintenir des tables de données de routage RIB séparées par topologie logique et des tables d'aiguillage FIB également séparées par topologie logique,
∘ chaque table de données de routage étant mise à jour par un protocole de routage commun et des métriques propres à chaque topologie.

9. Système selon la revendication 7 **caractérisé en ce qu'**il est constitué d'un réseau maillé administré et qu'il comprend des mandataires situés en bordure du réseau, lesdits mandataires ayant pour fonction d'injecter et/ou de consommer les signalisations de réservation dans le système de routage.

10. Système selon la revendication 7 **caractérisé en ce qu'**il supporte le protocole Internet IP et **en ce qu'**il utilise le protocole de réservation de ressources RSVP.

## Patentansprüche

1. Verfahren zum Routen von Datenflüssen in einem Maschennetz, **dadurch gekennzeichnet, dass** es multitopologische Router benutzt, die jeweils mit einem intelligenten Modul ausgestattet sind, und dadurch, dass es für jeden Router in Kombination wenigstens die folgenden Schritte beinhaltet:
- das Berechnen des Ressourcenbedarfs zum Einhalten der quantitativen und qualitativen Ablaufziele der zulässigen Flüsse, wobei die Berechnung gemäß der betrieblichen Bedeutung der Flüsse organisiert wird,
- das Verbreiten des Bedarfs von Router zu Router, ausgedrückt durch Signalisierung, die in einer Topologie und einer Zuordnung in jedem Router zwischen Topologie und betrieblicher Bedeutung geführt wird, um die Berechnung des zulässigen Bedarfs zu ermöglichen,
- das Ausarbeiten, anhand der Berechnung des zulässigen Bedarfs, einer Metrik von Verbindungen für jede der Topologien an einem intelligenten Modul,
- das Behalten der Routingdaten, insbesondere mit den Verbindungsmetriken, die dynamisch von jedem intelligenten Modul berechnet wurden, an jedem multitopologischen Router, und das Ermitteln einer Leitwegtabelle für jede Topologie,
- jeder Router zum Zulassen der Verbreitung von Datenflüssen gemäß einer mit der Topologie assoziierten Leitwegtabelle ausgelegt ist, wobei die Topologie durch die Paketkopffelder bestimmt wird; das Priorisieren der Routingtopologien oder -pläne, verwaltet durch das multitopologische Routernetz, wobei eine Topologie durch die unabhängigen Metriken definiert wird und zum Berechnen der optimalen Route führt,
- das Zuordnen von Ressourcen zu jeder Verbindung, wobei die Ressourcen von den Datenpaketflüssen unterscheidungsfrei benutzt werden können, unabhängig von der Topologie, zu der sie gehören,
- das Ermitteln der Metriken einer Topologie mit Niveau n-1, unter Berücksichtigung der von den Flüssen reservierten Ressourcen, die auf den Topologien mit einer betrieblichen Bedeutung transportiert werden, die strikt höher als Niveau n oder auf einem Niveau über n ist,
- das Getrennthalten der Routingdaten nach Topologie und der Leitwegtabellen, ebenfalls nach Topologie getrennt,
- das Aktualisieren, in jedem Router, der Routingdaten unter Verwendung eines allen Topologien gemeinsamen Routingprotokolls zwischen den Routern, und von Metriken, die jeder Topologie eigen sind.

2. Verfahren nach Anspruch 1, **dadurch gekennzeichnet, dass** die Berechnung der Metrik wenigstens einen der folgenden Parameter berücksichtigt: die für die Echtzeitflüsse verfügbare Bandbreite, die Übertragungszeit der Verbindung.

3. Verfahren nach einem der Ansprüche 1 bis 2, **dadurch gekennzeichnet, dass** die Metrik stufenweise entwickelt wird, wobei der Übergang von einer Stufe zu einer anderen durch Hysteresemechanismen geschützt wird.

4. Verfahren nach einem der Ansprüche 1 bis 3, **dadurch gekennzeichnet, dass** eine Ressourcenverwaltungssignalgabe benutzt wird.

5. Verfahren nach Anspruch 4, **dadurch gekennzeichnet, dass** Signale des Typs RSVP benutzt werden.

6. Verfahren nach Anspruch 1, **dadurch gekennzeichnet, dass** das Netz ein Kommunikationsnetz ist, das das Internetprotokoll IP unterstützt, und dadurch, dass im DSCP-Datenpaketfeld eine Markierung vorgesehen wird, die die betriebliche Bedeutung der Daten anzeigt.

7. System zum Routen von Datenflüssen, die in Form von Paketen vorliegen, **dadurch gekennzeichnet, dass** es einen Satz von Knoten umfasst, die jeweils einen multitopologischen Router umfassen, wobei ein Router ein Softwaremodul besitzt, das so ausgelegt ist, dass es die Schritte des Verfahrens nach einem der Ansprüche 1 bis 6 ausführt.

8. Routingsystem nach Anspruch 7, **dadurch gekennzeichnet, dass** das Softwaremodul ausgelegt ist zum:
- das Getrennthalten der RIB-Routingdatentabellen nach logischer Topologie und der FIB-Leitwegtabellen, ebenfalls nach logischer Topologie getrennt,
- wobei jede Routingdatentabelle durch ein gemeinsames Routingprotokoll und durch jeder Topologie eigene Metriken aktualisiert wird.

9. System nach Anspruch 7, **dadurch gekennzeichnet, dass** es aus einem verwalteten Maschennetz gebildet ist und am Rand des Netzes befindliche Vertreter umfasst, wobei die Vertreter die Aufgabe haben, die Reservierungssignale in dem Routingsystem zu injizieren und/oder zu verbrauchen.

10. System nach Anspruch 7, **dadurch gekennzeichnet, dass** es das Internetprotokoll IP unterstützt, und dadurch, dass es das RSVP-Ressourcenreservierungsprotokoll benutzt.

## Claims

1. A method of routing data streams in a meshed system, wherein it implements multitopology routers, each provided with an intelligent module, and in that it comprises, for each router, in combination, at least the following steps:
➢ accounting the resource requirements to keep to the quantitative and qualitative flow objectives of the accepted streams, the accounting being organized according to the operational importance of the streams,
➢ propagating from router to router of the expressed requirements using a switched signaling in a topology and a mapping in each router between topology and operational importance in order to allow for the accounting of the accepted needs,
➢ at the level of an intelligent module using the accounting of the accepted needs to generate a metric of links for each of the topologies,
➢ at the level of each multitopology router maintaining routing data, with, in particular, the link metrics calculated dynamically by each intelligent module and determines a switching table for each topology,
➢ each router is adapted to allow the propagation of the data streams according to the switching table associated with the topology, a topology that is designated by the packet header fields; hierarchically organizing the topologies or routing plans, managed by the network of multitopology routers, a topology being defined by independent metrics and giving rise to an optimum route calculation,
➢ assigning resources to each link, said resources being able to be used immaterially by the data packet streams, independently of the topology to which they belong,
➢ determining the metrics of a topology of level n-1, taking into account the resources reserved by the streams drove on topologies of operational importance strictly higher of level n or of a level higher than n,
➢ maintaining separate routing data for each topology and switching tables that are also separate for each topology,
➢ updating on each router the routing data by using, between the routers, an all-topology routing protocol and metrics specific to each topology.

2. The method as claimed in claims 1, wherein the calculation of the metric takes into account at least one of the following parameters: the bandwidth available for the real time streams, the link transmission delay.

3. The method as claimed in one of claims 1 or 2, wherein the metric is modified in levels, the transition from one level to another being protected by hysteresis mechanisms.

4. The method as claimed in one of claims 1 to 3, wherein a resource management signaling is used.

5. The method as claimed in claim 4, wherein an RSVP-type signaling is used.

6. The method as claimed in claim 1, wherein the network is a communication network supporting the Internet protocol IP and in that the DSCP data packet field contains a marker indicating the operational importance of the data.

7. A system for routing data streams in the form of packets, wherein it comprises a set of nodes, each comprising a multitopology router, a router having a software module adapted to execute the steps of the method as claimed in one of claims 1 to 6.

8. The routing system as claimed in claim 7, wherein the software module is adapted:
∘ to maintain routing data tables RIB that are separate for each logical topology and switching tables FIB that are also separate for each logical topology,
∘ each routing data table being updated by a common routing protocol and metrics specific to each topology.

9. The system as claimed in claim 7, wherein it consists of an administered meshed network, and in that it comprises agents located at the edge of the network, the function of said agents being to inject and/or consume the reservation signalings in the routing system.

10. The system as claimed in claim 7, wherein it supports the Internet protocol IP and wherein it uses the resource reservation protocol RSVP.
